# EUROPÄISCHE PATENTSCHRIFT

(11) **EP 2 321 560 B1**
(45) Veröffentlichungstag und Bekanntmachung des Hinweises auf die Patenterteilung: **25.01.2017**
(21) Anmeldenummer: 09779646.0
(22) Anmeldetag: 05.06.2009
(51) Int. Cl.: F16J 15/06, F16J 15/32, F16J 15/56

(54) **KOLBENPUMPE MIT DICHTUNGSANORDNUNG**
PISTON PUMP WITH SEAL ARRANGEMENT
POMPE À PISTONS AVEC SYSTÈME D'ÉTANCHÉITE

(30) Priorität: 05.08.2008 DE 102008040994
(43) Veröffentlichungstag der Anmeldung: 18.05.2011
(73) Patentinhaber: Robert Bosch GmbH, 70442 Stuttgart (DE)
(72) Erfinder: CALLIES, Horst, 72202 Nagold (DE); HORNBERGER, Kurt, 70597 Stuttgart (DE); SCHEPP, Rene, 71336 Waiblingen (DE); JAHN, Heiko, 71701 Schwieberdingen (DE); ZIMMERMANN, Marc, 71720 Oberstenfeld (DE); ALAZE, Norbert, 71706 Markgroeningen (DE); SMITS, Oliver, 33106 Paderborn (DE); ANDRE, Markus, 71638 Ludwigsburg (DE)
(86) Internationale Anmeldenummer: PCT/EP2009/056946
(87) Internationale Veröffentlichungsnummer: WO 2010/015439

(56) Entgegenhaltungen:
- EP-A- 1 008 787
- DE-A1- 2 218 376
- DE-A1- 2 232 238
- DE-A1- 10 360 601
- DE-A1-102005 007 392
- US-A1- 2005 040 602

## Beschreibung

### Stand der Technik

Die Erfindung betrifft eine Kolbenpumpe für ein Hydroaggregat einer schlupfregelbaren hydraulischen Fahrzeugbremsanlage mit einer Dichtungsanordnung aus einem Zylinderelement, einem im Zylinderelement aufgenommenen und zu einer axialen Hin- und Herbewegung antreibbaren Kolben sowie einem Dichtungselement zur Abtrennung eines vom Kolben und vom Zylinderelement begrenzten Arbeitsraums.

Aus dem Stand der Technik sind einteilige und aus einem einheitlichen Material gefertigte Dichtungselemente bekannt. Diese werden in Fachkreisen als Elastomerdichtungselemente bezeichnet. Sie sind in unterschiedlichen Querschnittsformen am Markt erhältlich. Bekannt sind z. B. O-Ringe, Quad-Ringe oder Nut-Ringe. Quad-Ringe und Nut-Ringe weisen entlang ihres Umfangs druckbeaufschlagbare Dichtlippen auf. Vorteilhafter Weise stellen die Dichtlippen mit zunehmender Druckbelastung eine verbesserte Abdichtwirkung bereit. Dennoch können derartige Dichtungselemente eine gewisse Druckmittelleckage nicht verhindern, insbesondere dann nicht, wenn aufgrund der Betriebsbedingungen am Dichtungselement zeitweise Unterdruck anliegt, wie dies bei Dichtungsanordnungen zur Abdichtung von Kolben in Zylindereinheiten üblicherweise der Fall ist. Bei Kolben-/Zylindereinheiten besteht eine weitere technische Herausforderung für das Dichtungselement darin, sowohl einen statischen Zustand (ruhendes, nicht bewegtes Kolbenelement) als auch einen dynamischen Zustand (axial betätigtes Kolbenelement) wirksam abzudichten.

Der Stand der Technik offenbart speziell für diese Fälle verhältnismäßig komplex gestaltete, mehrteilig ausgeführte Dichtungseinheiten, wie z. B. durch Federringe vorgespannte Kunststoff- oder Teflon-Ringe oder sogenannte Manschettensätze. Derartige Dichtungseinheiten haben üblicherweise eine asymmetrisch geformte Dichtseite und erzeugen ein dementsprechend asymmetrisches Kontaktdruckprofil. Ein wesentlicher Vorteil asymmetrischer Dichtungsprofile besteht darin, dass sie eine ungleiche hydrodynamische Schleppströmung bei ein- bzw. ausfahrender Kolbenbewegung bewirken, aufgrund der eine effektive Rückförderung von Medium zurück in den abzudichtenden Arbeitsraum erreicht werden kann. Bewegt sich der Kolben in diesen Arbeitsraum hinein (Arbeitshub) wird eine vergleichsweise starke Schleppwirkung erreicht. Bewegt sich der Kolben dagegen aus dem abzudichtenden Arbeitsraum heraus (Saughub), so zeichnen sich Dichtungselemente mit asymmetrischem Profil durch eine besonders geringe Schleppströmung nach außen aus. In der Bilanz wird damit eine effektive Rückförderung von Medium in den Arbeitsraum hinein und folglich eine hohe Dichtungswirkung erzielt. Das physikalische Grundprinzip auf dem die erläuterte Rückförderwirkung beruht, ist wissenschaftlich untersucht und zählt zum Stand der Technik (siehe beispielsweise DE 103 60 601 A1). Allerdings setzt die beschriebene Wirkungsweise eine lagerichtige Montage des Dichtungselements voraus.

Aus der DE 2 232 238 A1 eine Dichtungsanordnung für eine Kolbenstange eines Stoßdämpfers bekannt, die eine ringförmige Kolbenstangenführung mit einer inneren Aussparung zur Aufnahme einer ringförmigen Dichtung umfasst. Die Dichtung ist axial zusammengedrückt zwischen einer Schulter am inneren Ende der Aussparung und einem ringförmigen Halteglied dauerhaft gehalten und weist dazu einen in die Aussparung hineinragenden Fortsatz auf.

Weiterhin ist aus der US 2005/0040602 A1 eine Bürstendichtung bekannt, bei der ein Dichtelement in einem Bürstengehäuse aufgenommen ist. Dieses Bürstengehäuse ist aus mehreren Gehäuseteilen aufgebaut; ein zapfenförmiger Vorsprung an einem Gehäuseteil sichert die Bürstendichtung gegen Verdrehen.

### Vorteile der Erfindung

Die der Erfindung zugrunde liegende Kolbenpumpe weist Dichtungselemente auf, die einteilig ausgebildet sind und die vorteilhaften Herstelleigenschaften von Elastomerdichtungselementen mit den günstigen Rückfördereigenschaften asymmetrischer Dichtungsgeometrien kombinieren. Sie bewirken ein asymmetrisches Kontaktdruckprofil, das sich allein durch die mechanische Vorspannung der Dichtungselemente im Einbauraum in Verbindung mit den elastischen Materialeigenschaften und der Geometrie ihres Dichtungsquerschnitts ergibt. Separate Elemente zur mechanischen Vorspannung der Dichtungselemente sind also keine erforderlich.

Zur Feststellung einer lagerichtigen Montage ist das Dichtungselement mit wenigstens einer Markierung versehen. Diese Markierung ist kostengünstig am Dichtungselement anformbar, wirkt vorteilhafter Weise mit einem, dem Dichtungselement benachbarten Bauteil zusammen und beansprucht bei korrekter Montage des Dichtungselements gar keinen und bei fehlerhafter Montage einen zusätzlichen Bauraum. Fehlerhaft montierte Baugruppen sind dadurch leicht fest...
zu stellen, beispielsweise anhand einer technisch einfachen durchführbaren Maßprüfung oder einer optischen Prüfung. Beide Prüfungsarten sind wenigstens teilautomatisiert durchführbar und sind deshalb gut für eine Großserienfertigung geeignet.

Weitere Vorteile oder vorteilhafte Weiterbildungen der Erfindung ergeben sich aus den Unteransprüchen und der nachfolgenden Beschreibung.

### Zeichnung

Ein Ausführungsbeispiel der Erfindung ist in der Zeichnung dargestellt und in der nachfolgenden Beschreibung detailliert erläutert. Die einzige Figur zeigt ein erfindungsgemäßes Dichtungselement im Querschnitt.

### Beschreibung des Ausführungsbeispiels

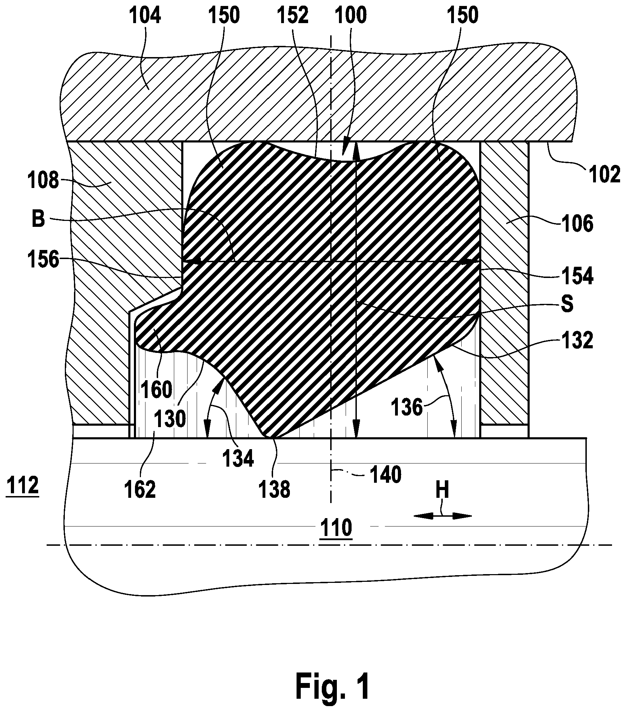

Das in der Figur dargestellte Dichtungselements 100 ist in einer Bohrung 102 eines Zylinderelements 104 zwischen einem Stützring 106 und einem Begrenzungselement 108 ortsfest angeordnet. Es ist ringförmig ausgebildet und dichtet beispielhaft mit seinem Innenumfang gegen die Umfangsfläche eines Kolbens 110 und am Außenumfang gegen eine Bohrungswand des Zylinderelements 104 ab. Der Kolben 110 ist relativ zum Dichtungselement 100 zu einer hin- und hergehenden Hubbewegung H antreibbar und ist dazu verschieblich im Begrenzungselement 108 geführt. Die Hubbewegung H verläuft in Axialrichtung der Bohrung 102. Ein vom Dichtungselement 100 abzudichtender Arbeitsraum 112 wird vom Kolben 110 und vom Zylinderelement 104 begrenzt und ist in der Figur 1 schematisch dargestellt.

Das erfindungsgemäße Dichtungselement 100 ist einteilig ausgeführt und hat einen Querschnitt mit im Wesentlichen quadratischer Grundform. Es besteht aus einem einheitlichen Elastomermaterial, vorzugsweise aus EPDM. Die Querschnittsform setzt sich aus vier, zumindest annähernd rechwinklig zueinander ausgerichteten Dichtungselementseiten zusammen, wobei diese Dichtungselementseiten jeweils unterschiedlich ausgestaltet sind.

Die in der Figur nach unten weisende erste Dichtungselementseite liegt an der Umfangsfläche des Kolbens 110 an und bildet die Innenkontur des Dichtungselements 100. Sie wird nachfolgend als Dichtseite bezeichnet. Die Gestaltung dieser Dichtseite wird von zwei konvergierenden Dichtungsflanken 130, 132 unterschiedlich großer Flankenwinkel 134, 136 bestimmt. Eine Dichtungslippe 138 ist am Übergang von der einen zur anderen Dichtungsflanke 130, 132 ausgebildet. Sie wird von einem Übergangsradius gebildet, der zwischen 0,1 und 0,4 mm groß ist. Aufgrund der beiden unterschiedlich großen Flankenwinkel 134, 136 liegt die Dichtungslippe 138 in Figur 1 nach links versetzt zu einer senkrecht zur Hubbewegung H verlaufenden Mittelachse 140 des Dichtungselements 100 und verleiht diesem eine asymmetrische Querschnittsform.

Die erste Dichtungsflanke 130 befindet sich auf einer dem Arbeitsraum 112 zugewandten Seite des Dichtungselements 100. Ihr Flankenwinkel 134 beträgt zwischen 50° bis 70°. Die zweite Dichtungsfläche 132 hat demgegenüber einen kleineren Flankenwinkel 132 von lediglich 10° bis 45° und ist abgewandt vom abzudichtenden Arbeitsraum 112 auf einer sogenannten Niederdruckseite des Dichtungselements 100 angeordnet. Beide Dichtungsflanken 130, 132 sind beispielhaft gerade ausgeführt.

Die der Dichtseite gegenüberliegende Seite des Dichtungselements 100 wird als Stützseite bezeichnet. Sie ist im Ausführungsbeispiel spiegelsymmetrisch zur Mittelachse 140 gestaltet und wird an ihrem niederdruck- und hochdruckseitigen Rand von jeweils einem vorstehenden Wulst 150 begrenzt. Die beiden Wulste 150 stützen sich an der Wandung der Bohrung 102 ab. Eine sich symmetrisch zu beiden Seiten der Mittelachse 140 erstreckende Aussparung 152 liegt zwischen beiden Wulsten 150 des Dichtungselements 100. Diese Aussparung 152 ist konkav nach innen gewölbt.

Die abgewandt von dem durch den Kolben 110 und das Zylinderelement 108 begrenzten Arbeitsraum 112 liegende Niederdruckseite des Dichtungselements 100 ist beim Ausführungsbeispiel in Form einer geraden Flanke 154 ausgeführt.

Eine dem Arbeitsraum 112 zugewandte und als Hochdruckseite bezeichnete Seite des Dichtungselements 100 liegt dieser Niederdruckseite gegenüber. Die Hochdruckseite ist abschnittsweise als gerade Flanke 156 ausgebildet und mit einer angeformten Markierung 160 versehen. Letztere erlaubt es, eine lagegerechte Montage des Dichtungselements 100 zu gewährleisten bzw. fehlerhaft montierte Dichtungselemente 100 leicht fest zu stellen.
Die Markierung 160 ist exemplarisch anhand eines im Wesentlich parallel zur Hubbewegung H des Kolbens 110 abstehenden umlaufenden Wulstes realisiert. Dieser erstreckt sich über einen Teil der Hochdruckseite und geht ansatzfrei in die erste Dichtungsflanke 130 der Dichtseite über.

Das Begrenzungselement 108 weist auf seiner dem Dichtungselement 100 zugewandten Seite eine Gegenmarkierung 162 in Form einer invertiert zum umlaufenden Wulst geformten Ausnehmung auf, welche die Markierung 160 vollständig aufnimmt. Im dargestellten Zustand bewirkt die Markierung 160 deshalb keine Vergrößerung des zwischen dem Führungselement 108 und dem Stützring 106 bestehenden Einbauraums.

Selbstverständlich wäre es möglich, die Markierung 160 am Dichtungselement 100 alternativ auch als Ausnehmung auszubilden, in die ein am Begrenzungselement 108 angeformter Vorsprung eingreift, um nicht lagerichtig montierte Dichtungselemente 100 anhand des vergrößerten Bauraumbedarfs für eine Montageeinheit aus Dichtungselement 100 und Führungselement 108 fest zu stellen.

Die äußeren Abmessungen des Dichtungselements 100 sind auf die Innenabmessungen des Zylinderelements 104 bzw. auf die Außenabmessungen des Kolbens 110 derart abgestimmt, dass sich im drucklosen Zustand der Dichtungsanordnung und bei nicht betätigtem, ruhendem Kolben 110 eine Verpressung des Dichtungselements 100 zwischen 8% und 25% einstellt. Das Verhältnis der Breite B zur Schnurstärke S des Dichtungselements 100 liegt im Bereich zwischen 0,5 und 2,0 sofern sich das Dichtungselement 100 im nicht druckbelasteten Zustand befindet. In Figur 1 ist der Querschnitt des Dichtungselements 100 im nicht verpressten Zustand dargestellt, da lediglich in diesem Zustand das beschriebene Querschnittsprofil erkennbar ist.

Aufgrund der Verpressung des Dichtungselement 100 in Kombination mit den unterschiedlich großen Flankenwinkeln 134, 136 der die Dichtlippe 138 bildenden Dichtungsflanken 134, 136 stellt sich ein vordefinierter Kontaktdruckverlauf ein, mit dem das Dichtungselement 100 gegen die Umfangsfläche des Kolbens 110 gedrückt wird. Den maximalen Kontaktdruck übt das Dichtungselement 100 im Bereich seiner Dichtlippe 138 auf den Kolben 110 aus. In axialer Richtung diesseits und jenseits der Dichtlippe 138 nimmt der Kontaktdruck kontinuierlich ab, wobei der Gradient der Kontaktdruckabnahme direkt im Zusammenhang mit der Größe des Flankenwinkels 134, 136 der zugeordneten Dichtflanken 130, 132 steht und mit dem Flankenwinkel 134, 136 innerhalb des zuvor angegebenen Winkelbereichs kontinuierlich zunimmt. Dies bedeutet, dass eine Dichtflanke mit großem Flankenwinkel einen steileren Abfall des Kontaktdrucks (großer Gradient) bewirkt, als eine Dichtflanke kleineren Flankenwinkels (kleinerer Gradient). Wie bereits erwähnt, weist die hochdruckseitige Dichtflanke 130 einen größeren Flankenwinkel 134 und damit einen größeren Gradienten auf als die niederdruckseitige Dichtflanke 132.

Die unterschiedlichen Gradienten bewirken bei einer Bewegung des Kolbens 110 in Richtung Hochdruckseite d. h. beim Einfahren des Kolbens 110 in den Arbeitsraum 112, eine vergleichsweise hohe Schleppströmung, so dass zuvor ausgetretenes Druckmittel in diesen vom Kolben 110 und vom Zylinderelement 104 begrenzten Arbeitsraum 112 zurück gefördert wird.

Die Außenseiten des Dichtungselements 100 gehen an ihren jeweiligen Rändern kontinuierlich, das heißt ohne Absätze, Stufen, spitze Kanten oder dergleichen, ineinander über. Ein kontinuierlicher Übergang ermöglicht einerseits eine gute Entformbarkeit des Dichtungselements 100 aus seiner Form bei der Herstellung und wirkt sich darüber hinaus vorteilhaft hinsichtlich der Abdichteigenschaften des Dichtungselements 100 im Einsatzfall aus.

Selbstverständlich sind Änderungen oder Ergänzungen am beschriebenen Ausführungsbeispiel denkbar, ohne vom Grundgedanken der Erfindung abzuweichen. Erfindungsgemäße Dichtungselemente eignen sich insbesondere für einen Einsatz bei Kolbenpumpen oder Druckspeichern in Hydroaggregaten schlupfregelbarer hydraulischer Fahrzeugbremsanlagen.

## Patentansprüche

1. Kolbenpumpe für ein Hydroaggregat einer schlupfregelbaren hydraulischen Fahrzeugbremsanlage mit einer Dichtungsanordnung aus einem Zylinderelement (104), einem im Zylinderelement (104) aufgenommenen und zu einer axialen Hin- und Herbewegung antreibbaren Kolben (110) und einem Dichtungselement (100) zur Abdichtung eines vom Kolben (110) und vom Zylinderelement (104) begrenzten Arbeitsraums (112), wobei das Dichtungselement (100) eine Dichtseite, eine der Dichtseite gegenüberliegende Stützseite, eine dem abzudichtenden Arbeitsraum (112) zugewandte Hochdruckseite und eine vom Arbeitsraum (112) abgewandt liegende Niederdruckseite aufweist und wobei die Dichtseite wenigstens eine, von zwei konvergierenden Dichtflanken (130, 132; 306, 308; 310, 312) unterschiedlich großer Flankenwinkel (134, 136) gebildete Dichtlippe (138; 302; 304) umfasst, wobei das Dichtungselement (100) ein einteilig ausgeführtes Bauteil ist, das aus einem einheitlichen Elastomermaterial, vorzugsweise aus EPDM, besteht, dass das Dichtungselement (100) wenigstens eine Markierung (160) zur Feststellung einer lagerichtigen Montage des Dichtungselements (100) aufweist, wobei diese Markierung (160) an der Hochdruckseite des Dichtungselements (100) angeordnet ist, ansatzfrei in die erste Dichtflanke der Dichtseite übergeht und in Form eines in Richtung der Hubbewegung (H) des Kolbens (110) vom Dichtungselement (100) abstehenden, umlaufenden Wulstes ausgebildet ist.

2. Kolbenpumpe nach Anspruch 1, **dadurch gekennzeichnet, dass** die Markierung (160) mit einer Gegenmarkierung (162) an einem dem Dichtungselement (100) benachbarten Bauteil (108) zusammenwirkt, wobei die Gegenmarkierung (162) und die Markierung (160) im Wesentlichen ohne eine Vergrößerung des vom Dichtungselement (100) und vom benachbarten Bauteil (108) benötigten Bauraums zu bewirken ineinander greifen.

## Claims

1. Piston pump for a hydraulic unit of a slip-contollable hydraulic vehicle braking system, having a seal arrangement comprising a cylinder element (104), a piston (110) which is accommodated in the cylinder element (104) and can be driven to perform an axial reciprocating movement, and a sealing element (100) for sealing a working space (112) delimited by the piston (110) and by the cylinder element (104), wherein the sealing element (100) has a sealing side, a supporting side opposite the sealing side, a high-pressure side facing the working space (112) to be sealed, and a low-pressure side facing away from the working space (112), and wherein the sealing side comprises at least one sealing lip (138; 302; 304) formed by two converging sealing flanks (130, 132; 306, 308; 310, 312) of differing flank angles (134, 136), wherein the sealing element (100) is a component which is in the form of a single part, is composed of a standardized elastomer material, preferably of EPDM, in that the sealing element (100) has at least one marking (160) for determining installation of the sealing element (100) in the correct position, wherein said marking (160) is arranged on the high-pressure side of the sealing element (100), merges seamlessly into the first sealing flank of the sealing side and is embodied in the form of a peripheral bead protruding from the sealing element (100) in the direction of the stroke movement (H) of the piston (110).

2. Piston pump according to Claim 1, **characterized in that** the marking (160) interacts with a mating marking (162) on a component (108) which is adjacent to the sealing element (100), the mating marking (162) and the marking (160) engaging one inside the other substantially without causing any increase in the construction space required by the sealing element (100) and by the adjacent component (108).

## Revendications

1. Pompe à piston pour un groupe hydraulique d'une installation de freinage hydraulique de véhicule à antipatinage comprenant un agencement d'étanchéité constitué d'un élément de cylindre (104), d'un piston (110) reçu dans l'élément de cylindre (104) et pouvant être entraîné suivant un mouvement de va-et-vient axial et un élément d'étanchéité (100) pour l'étanchéité d'un espace de travail (112) limité par le piston (110) et par l'élément de cylindre (104), l'élément d'étanchéité (100) présentant un côté d'étanchéité, un côté de support opposé au côté d'étanchéité, un côté haute pression tourné vers l'espace de travail à étanchéifier (112) et un côté basse pression situé à l'opposé de l'espace de travail (112), et le côté d'étanchéité comprenant au moins une lèvre d'étanchéité (138 ; 302 ; 304) formée par deux flancs d'étanchéité convergeant (130, 132 ; 306, 308 ; 310 , 312) ayant des angles de flancs de taille différente (134, 336), l'élément d'étanchéité (100) étant un composant réalisé d'une seule pièce qui se compose d'un matériau élastomère monobloc, de préférence d'EPDM, en ce que l'élément d'étanchéité (100) présente au moins un marquage (160) pour définir un montage en position correcte de l'élément d'étanchéité (100), ce marquage (160) étant disposé au niveau du côté haute pression de l'élément d'étanchéité (100), se prolongeant sans épaulement dans le premier flanc d'étanchéité du côté d'étanchéité et étant réalisé sous la forme d'un bourrelet périphérique faisant saillie depuis l'élément d'étanchéité (100) dans la direction du mouvement de course (H) du piston (110).

2. Pompe à piston selon la revendication 1, **caractérisée en ce que** le marquage (160) coopère avec un marquage conjugué (162) au niveau d'un composant (108) adjacent à l'élément d'étanchéité (100), le marquage conjugué (162) et le marquage (160) s'engageant l'un dans l'autre essentiellement sans provoquer d'augmentation de l'espace de construction requis par l'élément d'étanchéité (100) et par le composant adjacent (108).
